# FASCICULE DE BREVET EUROPEEN

(11) **EP 2 004 988 B1**
(45) Date de publication et mention de la délivrance du brevet: **26.03.2014**
(21) Numéro de dépôt: 07731847.5
(22) Date de dépôt: 30.03.2007
(51) Int. Cl.: F03C 1/04, F04B 1/04

(54) **PISTON POUR UN MOTEUR HYDRAULIQUE A PISTONS RADIAUX ET SON PROCÉDÉ DE FABRICATION**
KOLBEN FÜR EINE HYDRAULISCHE RADIALKOLBENMASCHINE UND HERSTELLUNGSVERFAHREN DAFÜR
PISTON FOR A RADIAL PISTON HYDRAULIC ENGINE AND METHOD FOR MAKING SAME

(30) Priorité: 31.03.2006 FR 0651131
(43) Date de publication de la demande: 24.12.2008
(73) Titulaire: POCLAIN HYDRAULICS INDUSTRIE, 60411 Verberie (FR)
(72) Inventeur: LEMAIRE, Gilles, F-60280 Margny les Compiegnes (FR); NOËL, Alain, 56400 Brech (FR)
(74) Mandataire: Intès, Didier Gérard André
(86) Numéro de dépôt international: PCT/FR2007/051043
(87) Numéro de publication internationale: WO 2007/113443

(56) Documents cités:
- WO-A-01/81727
- WO-A-98/14722
- DE-A1- 3 121 530
- DE-A1- 19 809 315
- DE-B- 2 351 465
- GB-A- 2 064 700

## Description

La présente invention concerne un piston pour un moteur hydraulique à pistons radiaux, comprenant un corps ayant une surface de guidage et d'étanchéité, une base et un haut, ce dernier présentant un évidement en berceau ayant une surface concave sensiblement en forme de portion de cylindre.

L'évidement en berceau du haut du piston sert à recevoir un rouleau ou galet destiné à rouler sur la came du moteur hydraulique à pistons radiaux. Au sens de la présente invention, un évidement en berceau présente une surface concave sensiblement en forme de portion de cylindre.

En fonctionnement d'un moteur à pistons radiaux, le bloc-cylindres et la came de ce moteur sont en rotation relative, et les pistons se déplacent radialement en va-et-vient à l'intérieur des cylindres du bloc-cylindres, leurs galets précités roulant sur la came.

Lors de ce mouvement en va-et-vient, la surface de guidage et d'étanchéité, qui est la surface latérale du piston (généralement de forme cylindrique, à base circulaire ou non) coopère à étanchéité contre la surface interne du cylindre dans lequel est logé le piston. La rotation relative du bloc-cylindres et de la came soumet le piston à des efforts de basculement, qui sont compensés par le guidage dû à la coopération des deux surfaces précitées. Les pressions de contact entre ces surfaces peuvent alors être relativement élevées, et il est souhaitable de tenter de les diminuer. De plus, les frottements entre les surfaces de guidage des pistons et les surfaces internes des cylindres occasionnent des échauffements locaux qui, s'ils deviennent excessifs, peuvent provoquer le grippage du piston. Le fluide présent dans le cylindre, entre le fond du cylindre et la base du piston, limite les échauffements, dans les régions immédiatement voisines à la base du piston. Toutefois, dans la partie de la surface de guidage et d'étanchéité qui est éloignée de cette base, ce refroidissement est moins bien réalisé, et les risques de grippage peuvent être importants, en particulier dans les régions médianes des surfaces de guidage et d'étanchéité.

DE 3121530 concerne un piston pour une machine à pistons radiaux, dont la partie haute présente une lèvre d'étanchéité, sur laquelle repose une bille.

FR 2 648 512 divulgue une machine hydraulique à pistons radiaux dont chaque piston présente, à sa base, un trou cylindrique borgne, centré sur son axe de translation, dont la fonction n'est pas mentionnée.

L'invention a pour but de remédier aux inconvénients précités, avec un piston qui de plus, puisse être fabriqué de manière simple et peu coûteuse.

Ce but est atteint grâce au fait que la base présente un évidement supplémentaire en berceau ayant une surface concave sensiblement en forme de portion de cylindre, de concavité opposée à la concavité de l'évidement du haut.

L'évidement présente une surface concave sensiblement en forme de portion de cylindre, dont l'aire est plus importante que celle du fond plat d'un piston, de sorte que la surface d'échange avec le fluide présent dans le cylindre est augmentée, ce qui favorise le refroidissement du piston. Une autre raison pour laquelle ce refroidissement est plus efficace que l'art antérieur est que le fluide présent dans l'évidement se trouve à un niveau radial décalé vers le haut du piston par rapport à son extrémité intérieure, ce qui permet de refroidir des zones de la surface de guidage et d'étanchéité quelque peu éloignées de cette extrémité intérieure.

Il convient encore de relever que la présence de l'évidement supplémentaire conduit à supprimer de la matière dans la base du piston, ce qui permet évidemment d'alléger ce dernier.

Par rapport aux trous borgnes de FR 2 648 512, l'évidement supplémentaire en berceau, qui est ouvert à ses extrémités situées dans la surface de guidage et d'étanchéité, permet d'alléger davantage la structure du piston, d'augmenter davantage la flexibilité des parties de la base du piston qui bordent l'évidement supplémentaire, et de favoriser le refroidissement, en augmentant la surface de contact du cylindre, avec le fluide présent dans ce cylindre sous la base du piston.

Avantageusement, les deux évidements en berceau sont orientés parallèlement l'un à l'autre.

Comme indiqué précédemment, les pistons sont soumis à des efforts de basculement par rapport à leur axe de translation, lors de la rotation relative du bloc-cylindres et de la came. Les efforts de basculement sont appliqués dans des plans perpendiculaires à l'axe de la rotation relative du bloc-cylindres et de la came. Les évidements en berceau du haut des pistons sont orientés parallèlement à cet axe pour permettre le roulement des galets présents dans ces évidements, contre la came. Dans ces conditions, lorsque les deux évidements d'un piston sont orientés parallèlement l'un à l'autre, l'évidement supplémentaire est également parallèle à l'axe de la rotation relative du bloc-cylindres et de la came. Du fait de la présence de cet évidement supplémentaire, les parties de la surface de guidage et d'étanchéité qui bordent cet évidement présentent une légère flexibilité qui leur permet de se déformer dans des plans perpendiculaires à l'axe de l'évidement. C'est donc précisément dans les plans dans lesquels les efforts de basculement sont importants que peuvent se déformer légèrement ces parties de la surface de guidage et d'étanchéité et augmenter les surfaces en contact. Ceci permet de limiter l'impact négatif des efforts de basculement en diminuant les pressions de contact et en évitant les frottements localisés excessifs.

L'invention concerne également un procédé pour fabriquer, à partir d'une barre cylindrique ayant un axe longitudinal, des pistons pour un moteur à pistons radiaux, ces derniers comprenant chacun un corps ayant une surface de guidage et d'étanchéité, une base et un haut, ce dernier présentant un évidement en berceau.

Dans les procédés connus, chaque piston est obtenu à partir d'un lopin, par exemple par tronçonnage d'une barre cylindrique. Chaque lopin est percé pour réaliser, dans le haut du piston correspondant, l'évidement en berceau qui servira à loger le galet du piston. Dans la pratique, on réalise un perçage cylindrique dans une partie d'extrémité de chaque lopin et, éventuellement, pour former une surface d'arrêt à l'intérieur de l'évidement du haut du piston, on modifie ce perçage à l'aide d'un outil du genre broche. En particulier, cette surface d'arrêt sert à retenir contre le fond de l'évidement un coussinet en berceau, contre lequel roule le galet du piston, également retenu dans l'évidement. Ensuite, cette partie d'extrémité est coupée en travers du perçage de telle sorte qu'une partie du perçage, délimitant l'évidement en berceau, forme le haut du piston, tandis que le bout de lopin dans lequel l'autre partie du perçage était usinée est supprimé. Il en résulte une perte de matière importante, qui peut atteindre environ 50 %.

L'invention a pour but d'améliorer cet état de la technique en proposant un procédé qui permet des cadences de fabrication plus élevées et limite les pertes de matière.

Ce but est atteint grâce au fait qu'on usine des perçages transversaux cylindriques à intervalles réguliers dans la barre et, pour former deux pistons adjacents, on découpe la barre selon un plan transversal de découpe passant par un perçage, de telle sorte qu'une première partie dudit perçage forme un évidement en berceau dans la base du premier des deux pistons adjacents et qu'une autre partie de ce perçage forme un évidement en berceau dans le haut du deuxième des deux pistons adjacents.

Avec le procédé de l'invention, les perçages sont usinés directement dans la barre, avant le tronçonnage de cette dernière, et peuvent donc être réalisés automatiquement dans d'excellentes conditions. Notamment, il est plus facile de maintenir correctement la barre sur une longueur importante, que de maintenir les lopins individuels comme dans l'art antérieur, pour réaliser ces opérations de perçage. Par ailleurs, on obtient avec l'invention, un gain de matière extrêmement conséquent puisqu'aucun perçage n'est "perdu", chaque perçage ayant une première partie qui sert à former l'évidement d'un piston, et une deuxième partie qui sert à former l'évidement du piston adjacent.

Si un usinage (en particulier un brochage) est nécessaire pour former des surfaces d'arrêt dans les évidements du haut des pistons, celui-ci est réalisé dans la barre comportant la série de perçages, avant son tronçonnage.

Par ailleurs, les pistons obtenus à l'aide du procédé présentent chacun deux évidements, ce qui, comme on l'a indiqué précédemment, offre des avantages importants en matière de limitation des pressions de contact, des frottements et du poids, et d'amélioration du refroidissement des pistons équipant un moteur hydraulique à pistons radiaux.

L'invention sera bien comprise et ses avantages apparaîtront mieux à la lecture de la description détaillée qui suit, d'un mode de réalisation représenté à titre d'exemple non limitatif. La description se réfère aux dessins sur lesquels :
- la figure 1 est une vue en perspective d'un piston conforme à l'invention ;
- la figure 2 est une vue en coupe dans le plan II de la figure 1, passant par l'axe de translation du piston, et perpendiculaire à l'axe de ces berceaux ;
- la figure 3 est une vue analogue à la figure 1, pour un piston selon une variante ;
- la figure 4 est une vue analogue à la figure 2 pour le piston de la figure 3 ; et
- les figures 5A à 5F illustrent le procédé de fabrication selon l'invention.

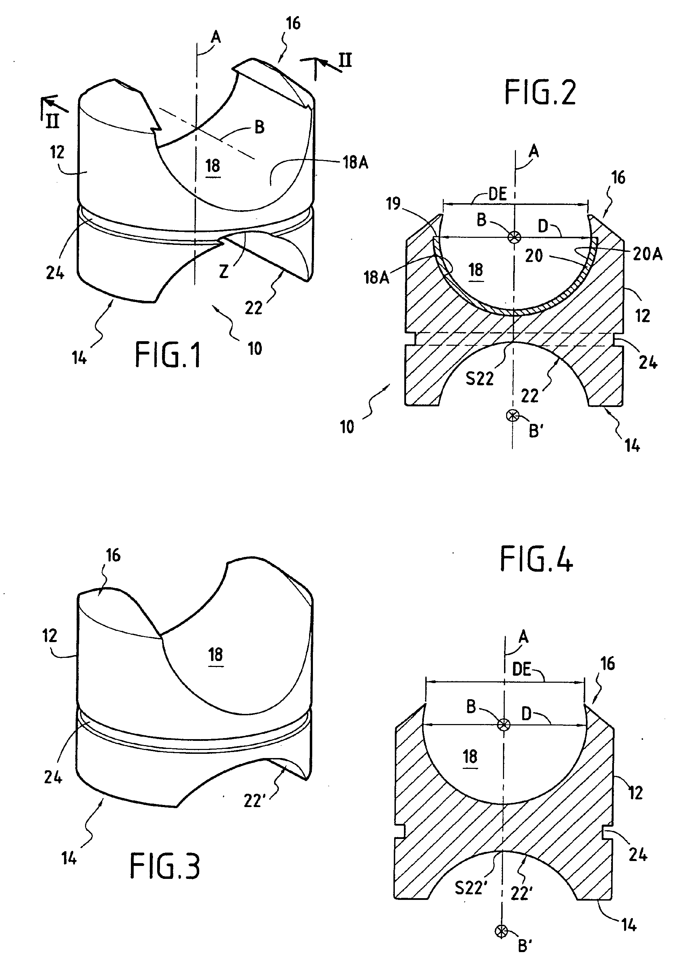

Le piston de la figure 1 comprend un corps 10 ayant une surface de guidage et d'étanchéité 12, une base 14 et un haut 16.

La surface de guidage et d'étanchéité a une forme globalement cylindrique, à base circulaire ou non, adaptée à la forme du cylindre dans lequel le piston est destiné à coulisser. La base du piston est son extrémité qui, lorsque le piston est installé dans un cylindre d'un moteur à pistons radiaux, est la plus proche du fond de cylindre. Le haut du piston est opposé à la base.

On voit que le haut 16 du piston présente un évidement en berceau 18. Cet évidement forme, sur le haut du piston, une surface concave 18A sensiblement en forme de portion de cylindre d'axe B, perpendiculaire à l'axe A de symétrie du piston, qui est l'axe selon lequel ce piston est destiné à se déplacer en translation dans le bloc-cylindres d'un moteur à pistons radiaux.

L'évidement en berceau 18 sert à loger, dans le haut du piston, un galet destiné à rouler contre la came du moteur à pistons radiaux. Comme on le voit mieux sur la figure 2, l'évidement en berceau 18 s'étend sur plus de 180°, de sorte que la distance DE entre bords de l'évidement 18 est légèrement inférieure au diamètre D de la surface cylindrique de support de ce galet ou rouleau. Dans l'exemple représenté, un coussinet 20 est logé contre la surface 18A de l'évidement en berceau et est retenu vers le haut par un épaulement 19 de cet évidement. La surface cylindrique de support du galet est délimitée par la surface cylindrique extérieure 20A du coussinet, en prolongement de la partie de l'évidement 18 qui s'étend entre les épaulements 19 et le bord supérieur du piston.

La base 14 du piston présente un évidement supplémentaire en berceau 22 dont la concavité est opposée à celle de l'évidement 18 du haut. On voit sur la figure 2 que les deux évidements en berceaux 18 et 22 sont orientés parallèlement l'un à l'autre. En effet, l'évidement 22 forme également une surface concave sensiblement en forme de portion de cylindre, d'axe B' parallèle à l'axe B précité. On voit de plus que les axes B et B' coupent tous les deux l'axe A du piston, de sorte que les évidements 18 et 22 présentent un même plan de symétrie défini par les axes A, B et B'. Contrairement à l'évidement 18, l'évidement supplémentaire 22 s'étend sur moins de 180°.

La surface 12 présente une gorge annulaire 24 qui est apte à recevoir un organe d'étanchéité tel qu'un joint ou un segment. On voit sur les figures 1 et 2 que le sommet S22 de l'évidement en berceau 22 est situé au voisinage de la gorge 24 et même que cet évidement et cette gorge présentent une zone d'intersection Z.

Dans l'exemple des figures 3 et 4, l'évidement supplémentaire 22' est très légèrement moins creusé et l'on voit que, si son sommet S22' s'étend également au voisinage de la gorge 24 de la surface 12 du piston, ce sommet ne coupe pas cette gorge.

Pour le reste, les évidements 18 et 22' sont analogues aux évidements 18 et 22 des figures 1 et 2, étant en particulier souligné que la surface cylindrique concave de l'évidement 18 s'étend sur plus de 180°C, ce qui n'est pas le cas de la surface concave de l'évidement 22'. les figures 3 et 4 représentent le cas d'un piston sans coussinet dans l'évidement duquel se loge directement le galet. De préférence, comme sur les figures 1 et 2, l'évidement en berceau 18 s'étend sur plus de 180°, de sorte que la distance DE entre bords de l'évidement 18 est légèrement inférieure au diamètre D de la surface cylindrique de support de ce galet ou rouleau.

En réalité, comme on le verra dans la suite eu égard au procédé de fabrication de l'invention, les surfaces des deux évidements 18 et 22 ou 18 et 22' sont deux parties sensiblement complémentaires d'une surface cylindrique complète, en faisant abstraction du renfoncement dans lequel est logé le coussinet 20 lorsqu'il est prévu.

Il est avantageux que l'évidement supplémentaire s'étende jusqu'au voisinage de la gorge 24, de manière à alléger au maximum la structure du piston, les sommets des deux évidements étant relativement proches l'un de l'autre. Selon le type d'organe d'étanchéité utilisé, la gorge 24 peut avoir une intersection avec l'évidement supplémentaire, qui ne la traverse toutefois pas complètement, ou bien au contraire, il peut être préférable qu'une telle intersection n'existe pas.

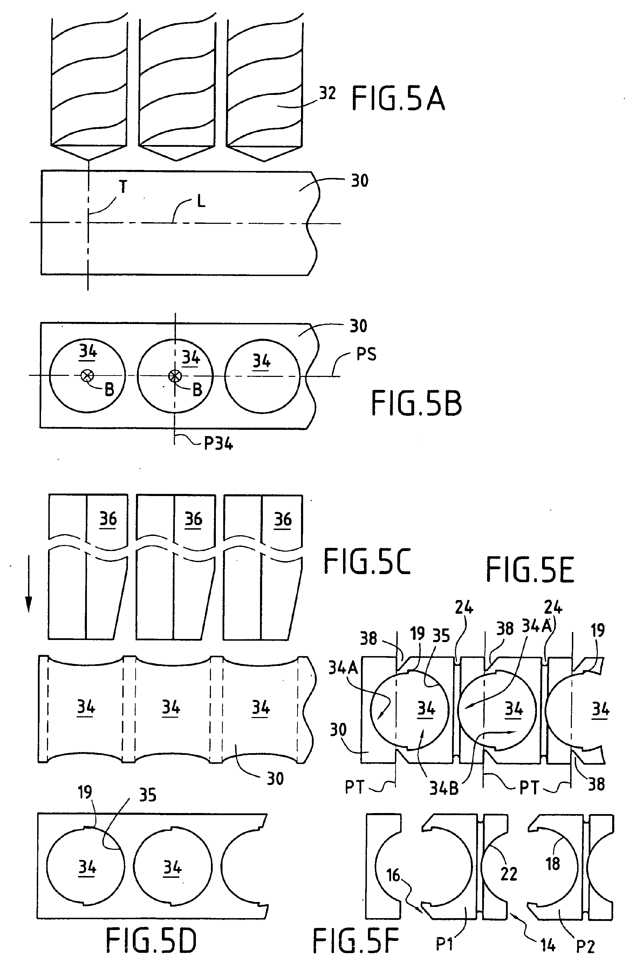

En référence aux figures 5A à 5F, on décrit maintenant le procédé de l'invention. On part d'une barre 30 ayant un axe longitudinal L, et une forme cylindrique correspondant à l'enveloppe de la surface de guidage et d'étanchéité des pistons que l'on souhaite réaliser à partir de cette barre. On usine dans cette barre des perçages 34 orientés transversalement par rapport à l'axe longitudinal L, les perçages étant disposés à intervalle régulier sur la longueur de la barre et ayant un plan de symétrie PS commun, comprenant la direction longitudinale L de la barre et l'axe B de ces perçages. Par exemple, pour usiner les perçages 34, on utilise une pluralité de forêts 32 régulièrement espacés les uns des autres, ou bien un forêt, déplacé par rapport à la barre après chaque perçage.

Sur la figure 5B, la barre a été tournée de 90° par rapport à la figure 5A, pour permettre de voir les perçages. Ces perçages 34 sont cylindriques. Pour réaliser, lorsqu'elles sont prévues, des surfaces d'arrêt (épaulements 19) dans les évidements 18 du haut des pistons, on peut réaliser une étape d'usinage spécifique. C'est ce que montre la figure 5C, sur laquelle on voit que des broches 36 peuvent être introduites dans les perçages 34 pour en modifier localement la surface interne.

Sur la figure 5D, on voit qu'on a ainsi créé des renfoncements 35 en forme de portions de cylindres dans les perçages en ménageant des épaulements 19 s'étendant parallèlement aux axes des cylindres. Par exemple, les renfoncements s'étendent sur environ 180°.

Comme le montre la figure 5E, on réalise par exemple par tournage les gorges de joint d'étanchéité 24 sur la surface cylindrique de la barre 30, (elles peuvent aussi être faites en première opération) et l'on réalise également des zones de séparation entre pistons 38, disposées à intervalles réguliers. Ces zones 38 sont des portions de gorge, formées sur les parois des perçages. Elles peuvent être réalisées simultanément avec les gorges 24 ou séparément, par une opération de fraisage. Les gorges 38 créent les zones de fragilité locale facilitant le tronçonnage de la barre selon ces gorges. Elles permettent également de chanfreiner le haut des pistons. On voit sur la figure 5E que chaque gorge 38 passe par un plan PT transversal à la barre 30, lequel plan coupe un perçage 34. Pour former deux pistons adjacents, on découpe le tronçon de barre selon un tel plan PT, de sorte qu'une première partie 34A du perçage 34, qui est située d'un premier côté du plan PT sert à former un évidement en berceau 22 dans la base 14 d'un piston P1 et qu'une autre partie 34B de ce perçage, située de l'autre côté du plan PT, sert à former un évidement 18 dans le haut d'un piston P2. Les pistons P1 et P2 sont adjacents lors de leur fabrication, puisqu'ils sont délimités de part et d'autre du même plan de découpe PT.

Des opérations de rectification peuvent être réalisées sur les pistons P1 et P2. On comprend toutefois que l'évidement 22 du piston P1 correspond pratiquement intégralement à la première partie 34A du perçage 34 et que l'évidement 18 du piston P2 correspond pratiquement intégralement à la deuxième partie 34B de ce perçage. En d'autres termes, les deux évidements 18 et 22 sont deux parties sensiblement complémentaires de la surface cylindrique complète du perçage 34, abstraction faite du renfoncement 35, lorsqu'il est présent. On voit en comparant les figures 5B et 5E que le plan transversal de découpe PT est décalé par rapport au plan transversal de symétrie P34 du perçage 34 par lequel passe ce plan PT. Le plan P34 est transversal à l'axe L de la barre et contient l'axe B du perçage. Ainsi, lors de la découpe par le plan PT, les deux évidements provenant du perçage 34 sont inégaux. L'évidement 22 de la base du piston P1 est le plus petit de ces deux évidements.

Selon l'invention, plusieurs étapes de fabrication des pistons sont réalisées à partir de la barre 30, avant la séparation des pistons individuels. Cette barre peut être initialement coupée à la longueur souhaitée, compatible avec le dimensionnement de la machine d'usinage. Il peut s'agir d'un tronçon de barre de plusieurs dizaines de centimètres.

En particulier, les opérations d'usinage des perçages 34, et des gorges 38 et 24 sont réalisées sur la barre. De manière générale, des opérations d'usinage telles que tournage et fraisage sont avantageusement réalisées sur la barre. On peut également prévoir que certaines opérations d'usinage supplémentaires, par exemple de rectification, de traitement, de revêtement ou d'ébavurage soient réalisées sur la barre usinée, avant le tronçonnage de cette dernière en pistons individuels avec l'avantage de réduire les opérations de manutention. Cette particularité peut même faciliter le tronçonnage de la barre, puisque certains traitements peuvent augmenter la fragilité locale de la zone de séparation dans chaque gorge 38 et faciliter ainsi la découpe. Par exemple, la quantité de matière délimitée entre le fond de la gorge 38 et le perçage 34 peut être suffisamment faible pour que la découpe soit obtenue par un simple choc suffisamment violent.

## Revendications

1. Piston pour un moteur hydraulique à pistons radiaux, comprenant un corps (10) ayant une surface de guidage et d'étanchéité (12), une base (14) et un haut (16), ce dernier présentant un évidement en berceau ayant une surface concave sensiblement en forme de portion de cylindre,
**caractérisé en ce que** la base présente un évidement supplémentaire en berceau (22, 22') ayant une surface concave sensiblement en forme de portion de cylindre, de concavité opposée à la concavité de l'évidement (18) du haut.

2. Piston selon la revendication 1, **caractérisé en ce que** les deux évidements en berceau (18, 22 ; 18, 22') sont orientés parallèlement l'un à l'autre.

3. Piston selon la revendication 2, **caractérisé en ce que** les évidements en berceau (18, 22 ; 18, 22') présentent un même plan de symétrie (A, B, B').

4. Piston selon l'une quelconque des revendications 1 à 3, dont la surface de guidage et d'étanchéité (12) présente une gorge annulaire (24) apte à recevoir un organe d'étanchéité, **caractérisé en ce que** le sommet (S22, S22') de l'évidement supplémentaire (22, 22') est situé au voisinage de la gorge (24).

5. Piston selon la revendication 4, **caractérisé en ce que** l'évidement supplémentaire (22) et la gorge (24) présentent une zone d intersection.

6. Piston selon l'une quelconque des revendications 1 à 5, **caractérisé en ce que** les surfaces des deux évidements (18, 22 ; 18, 22') sont deux parties sensiblement complémentaires d'une surface cylindrique complète.

7. Procédé pour fabriquer, à partir d'une barre cylindrique (30) ayant un axe longitudinal, des pistons selon l'une quelconque des revendications 2 à 6, **caractérisé en ce qu'**on usine des perçages transversaux cylindriques (34) à intervalles réguliers dans la barre et, pour former deux pistons adjacents, on découpe la barre (30) selon un plan transversal de découpe (PT) passant par un perçage (34), de telle sorte qu'une première partie (34A) dudit perçage forme un évidement en berceau (22) dans la base (14) du premier (P1) des deux pistons adjacents et qu'une autre partie (34B) de ce perçage forme un évidement en berceau (18) dans le haut (16) du deuxième (P2) des deux pistons adjacents.

8. Procédé selon la revendication 7, **caractérisé en ce que** le plan transversal de découpe (PT) est décalé par rapport au plan transversal de symétrie (P34) du perçage (34) par lequel passe ce plan de découpe pour découper deux évidements en berceau (18, 22') inégaux, le plus petit évidement (22') étant l'évidement de la base du premier piston (P1).

9. Procédé selon la revendication 7 ou 8, **caractérisé en ce que** des opérations d'usinage supplémentaires, telles que rectification, traitement, ébavurage, revêtement, tournage et fraisage sont réalisées sur la barre avant découpe.

## Patentansprüche

1. Kolben für einen Radialkolben-Hydraulikmotor, umfassend einen Körper (10) mit einer Führungs- und Dichtungsfläche (12), einer Basis (14) und einer Oberseite (16), wobei letztere eine wiegenförmige Ausnehmung, die eine im Wesentlichen zylinderabschnittsförmige konkave Oberfläche hat, aufweist,
**dadurch gekennzeichnet, dass** die Basis eine zusätzliche wiegenförmige Ausnehmung (22, 22') aufweist, die eine im Wesentlichen zylinderabschnittsförmige konkave Oberfläche mit einer zu der Konkavität der Ausnehmung (18) der Oberseite entgegengesetzten Konkavität hat.

2. Kolben nach Anspruch 1, **dadurch gekennzeichnet, dass** die beiden wiegenförmigen Ausnehmungen (18, 22; 18, 22') parallel zueinander ausgerichtet sind.

3. Kolben nach Anspruch 2, **dadurch gekennzeichnet, dass** die wiegenförmigen Ausnehmungen (18, 22; 18, 22') eine gleiche Symmetrieebene (A, B, B') aufweisen.

4. Kolben nach einem der Ansprüche 1 bis 3, dessen Führungs- und Dichtungsfläche (12) eine Ringnut (24) aufweist, die geeignet ist, ein Dichtungsorgan aufzunehmen, **dadurch gekennzeichnet, dass** der Scheitel (S22, S22') der zusätzlichen Ausnehmung (22, 22') in der Nähe der Nut (24) gelegen ist.

5. Kolben nach Anspruch 4, **dadurch gekennzeichnet, dass** die zusätzliche Ausnehmung (22) und die Nut (24) einen Schnittbereich aufweisen.

6. Kolben nach einem der Ansprüche 1 bis 5, **dadurch gekennzeichnet, dass** die Oberflächen der beiden Ausnehmungen (18, 22; 18, 22') zwei im Wesentlichen komplementäre Teile einer vollständigen Zylinderfläche sind.

7. Verfahren zur Herstellung von Kolben nach einem der Ansprüche 2 bis 6 aus einer zylindrischen Stange (30) mit einer Längsachse, **dadurch gekennzeichnet, dass** zylindrische Querbohrungen (34) in gleichmäßigen Abständen in die Stange gearbeitet werden und zur Bildung von zwei benachbarten Kolben die Stange (30) entlang einer querverlaufenden Schnittebene (PT), die durch eine Bohrung (34) verläuft, derart geschnitten wird, dass ein erster Teil (34A) der Bohrung eine wiegenförmige Ausnehmung (22) in der Basis (14) des ersten (P1) der beiden benachbarten Kolben bildet und dass ein weiterer Teil (34B) dieser Bohrung eine wiegenförmige Ausnehmung (18) in der Oberseite (16) des zweiten (P2) der beiden benachbarten Kolben bildet.

8. Verfahren nach Anspruch 7, **dadurch gekennzeichnet, dass** die querverlaufende Schnittebene (PT) gegenüber der querverlaufenden Symmetrieebene (P34) der Bohrung (34), durch die diese Schnittebene verläuft, versetzt ist, um zwei ungleiche wiegenförmige Ausnehmungen (18, 22') zu schneiden, wobei die kleinste Ausnehmung (22') die Ausnehmung der Basis des ersten Kolbens (P1) ist.

9. Verfahren nach Anspruch 7 oder 8, **dadurch gekennzeichnet, dass** zusätzliche Bearbeitungsvorgänge, wie Schleifen, Behandeln, Entgraten, Beschichten, Drehen und Fräsen an der Stange vor dem Schneiden durchgeführt werden.

## Claims

1. A piston for a hydraulic motor having radial pistons, said piston comprising a body (10) having a guiding and sealing surface (12), a base (14), and a top (16), which top is provided with a cradle-shaped recess having a concave surface which is substantially in the shape of a fraction of a cylinder;
said piston being **characterized in that** the base is provided with an additional cradle-shaped recess (22, 22') having a concave surface substantially in the shape of a fraction of a cylinder, which concave surface faces in the direction opposite from the direction in which the concave surface of the recess (18) in the top faces.

2. A piston according to claim 1, **characterized in that** the two cradle-shaped recesses (18, 22; 18, 22') extend parallel to each other.

3. A piston according to claim 2, **characterized in that** the cradle-shaped recesses (18, 22; 18, 22') have a common plane of symmetry (A, B, B').

4. A piston according to any one of claims 1 to 3, whose guiding and sealing surface (12) is provided with an annular groove (24) suitable for receiving a sealing member, said piston being **characterized in that** the crest (S22, S22') of the additional recess (22, 22') is situated in the vicinity of the groove (24).

5. A piston according to claim 4, **characterized in that** the additional recess (22) and the groove (24) have a zone of intersection.

6. A piston according to any one of claims 1 to 5, **characterized in that** the surfaces of the two recesses (18, 22; 18, 22') are two substantially complementary fractions of a complete cylindrical surface.

7. A method of manufacturing pistons according to any one of claims 2 to 6 from a cylindrical bar (30) having a longitudinal axis, said method being **characterized in that** it comprises machining cylindrical transverse holes (34) at regular intervals in the bar, and, in order to form two adjacent pistons, cutting up the bar (30) on a transverse cutting-up plane (PT) passing through a hole (34), so that a first portion (34A) of said hole forms a cradle-shaped recess (22) in the base (14) of the first one (P1) of the two adjacent pistons and so that another portion (34B) of said hole forms a cradle-shaped recess (18) in the top (16) of the second one (P2) of the two adjacent pistons.

8. A method according to claim 7, **characterized in that** the transverse cutting-up plane (PT) is offset relative to the transverse plane of symmetry (P34) of the hole (34) through which said cutting-up plane passes so as to form two cradle-shaped recesses (18, 22') that are of different sizes, the smaller recess (22') being the recess in the base of the first piston (P1).

9. A method according to claim 7 or claim 8, **characterized in that** additional machining operations, such as rectification, treatment, de-burring, coating, lining, turning and milling are performed on the bar before it is cut up.
